# EUROPÄISCHE PATENTANMELDUNG

(11) **EP 4 773 057 A1**
(43) Veröffentlichungstag der Anmeldung: **08.07.2026**
(21) Anmeldenummer: 25221066.1
(22) Anmeldetag: 05.12.2025
(51) Int. Cl.: G06Q 10/087, H04W 4/80

(54) **VERFAHREN UND STEUEREINRICHTUNG ZUM BETREIBEN EINES LAGERBEHÄLTERS ZUM LAGERN VON LEBENSMITTELN, VERFAHREN UND STEUEREINHEIT ZUM BETREIBEN EINES MOBILEN ENDGERÄTES UND LAGERBEHÄLTER ZUM LAGERN VON LEBENSMITTELN**

(30) Priorität: 07.01.2025 LU 103506
(71) Anmelder: Miele & Cie. KG, 33332 Gütersloh (DE)
(72) Erfinder: Westergerling, Mario, 33334 Gütersloh (DE); Franzmeier, Jens, 32052 Herford (DE); Koch, Daniel, 32120 Hiddenhausen (DE); Schmelter, Stefan, 33330 Gütersloh (DE)

(57) **Zusammenfassung**

Die Erfindung betrifft ein Verfahren zum Betreiben eines Lagerbehälters (100) zum Lagern von Lebensmitteln, wobei der Lagerbehälter (100) über eine Drahtlosverbindung datenübertragungsfähig mit mindestens einem mobilen Endgerät (104) koppelbar ist, wobei das Verfahren einen Schritt des Empfangens von Daten über die Drahtlosverbindung zwischen dem mobilen Endgerät (104) und dem Lagerbehälter (100), wobei die Daten eine durch eine Person bereitgestellte Information über einen Inhalt des Lagerbehälters (100) repräsentieren, einen Schritt des Speicherns der Daten auf einer Speichereinrichtung (107) des Lagerbehälters (100), einen Schritt des Herstellens einer weiteren Drahtlosverbindung zwischen dem Lagerbehälter (100) und zumindest einem weiteren mobilen Endgerät (114) zur Datenübertragung und einen Schritt des Bereitstellens der Daten über die weitere Drahtlosverbindung an das weitere mobile Endgerät (114) umfasst.

## Beschreibung

Die Erfindung betrifft ein Verfahren und eine Steuereinrichtung zum Betreiben eines Lagerbehälters zum Lagern von Lebensmitteln, ein Verfahren und eine Steuereinheit zum Betreiben eines mobilen Endgerätes und einen Lagerbehälter zum Lagern von Lebensmitteln.

Lagerbehälter zum Lagern von Lebensmitteln können mit einem QR-Code versehen sein, mit dem der Endnutzer hinterlegen kann, wann und was er in den Lagerbehälter, der auch als Vorratsbehälter bezeichnet werden kann, eingefüllt hat. Durch die Anbindung an eine App kann der Nutzer dann über die Haltbarkeit des Lebensmittels informiert werden.

Der hier vorgestellte Ansatz stellt sich die Aufgabe, ein verbessertes Verfahren und eine verbesserte Steuereinrichtung zum Betreiben eines Lagerbehälters zum Lagern von Lebensmitteln, ein verbessertes Verfahren und eine verbesserte Steuereinheit zum Betreiben eines mobilen Endgerätes und einen verbesserten Lagerbehälter zum Lagern von Lebensmitteln zu schaffen.

Erfindungsgemäß wird diese Aufgabe durch ein Verfahren und eine Steuereinrichtung zum Betreiben eines Lagerbehälters zum Lagern von Lebensmitteln, ein Verfahren und eine Steuereinheit zum Betreiben eines mobilen Endgerätes und durch einen Lagerbehälter zum Lagern von Lebensmitteln mit den Merkmalen der Hauptansprüche gelöst. Vorteilhafte Ausgestaltungen und Weiterbildungen der Erfindung ergeben sich aus den nachfolgenden Unteransprüchen.

Durch den vorgestellten Ansatz kann eine Möglichkeit geschaffen werden, um Informationen automatisiert an einen Nutzer bereitstellen zu können. Diese Informationen können sich beispielsweise auf Speisen bzw. ihre Inhaltsstoffe oder gar auf ganze Rezepte beziehen. Vorteilhafterweise kann dadurch ein Nutzerkomfort verbessert werden, da der Nutzer beispielsweise bei Bedarf die Informationen abrufen kann. Auch kann die Sicherheit von Konsumenten der Speisen erhöht werden.

Es wird ein Verfahren zum Betreiben eines Lagerbehälters zum Lagern von Lebensmitteln vorgestellt, wobei der Lagerbehälter über eine Drahtlosverbindung datenübertragungsfähig mit mindestens einem mobilen Endgerät koppelbar ist. Das Verfahren umfasst einen Schritt des Empfangens von Daten über die Drahtlosverbindung zwischen dem mobilen Endgerät und dem Lagerbehälter, wobei die Daten eine durch eine Person bereitgestellte Information über einen Inhalt des Lagerbehälters repräsentieren sowie einen Schritt des Speicherns der Daten auf einer Speichereinrichtung des Lagerbehälters. Weiterhin umfasst das Verfahren einen Schritt des Herstellens einer weiteren Drahtlosverbindung zwischen dem Lagerbehälter und zumindest einem weiteren mobilen Endgerät zur Datenübertragung und einen Schritt des Bereitstellens der Daten über die weitere Drahtlosverbindung an das weitere mobile Endgerät.

Der Lagerbehälter kann beispielsweise auch als ein Aufbewahrungsbehälter ausgeführt sein, der beispielsweise im Haushalt, aber auch beispielsweise im gewerblichen Bereich, beispielsweise für einen Cateringservice verwendbar ist. Durch das Speichern und das digitale Bereitstellen der Daten und somit der Informationen, die beispielsweise Inhaltsstoffe oder Allergene repräsentieren können, kann beispielsweise auf ein Aufstellen von Schildern verzichtet und dadurch beispielsweise Müll reduziert werden. Die koppelbaren mobilen Endgeräte können beispielsweise als Smartphones, Tablets, Datenbrillen und/oder als Smartwatches realisiert sein.

Durch den vorgestellten Ansatz kann die Person vorteilhafterweise Informationen, wie beispielsweise Allergene oder auch ganze Rezepte auf dem Lagerbehälter hinterlegen, sodass eine weitere Person diese Informationen selbstständig bei Bedarf beziehen kann. Dazu kann die weitere Person vorteilhafterweise die weitere Datenübertragung nutzen, die zwischen dem Lagerbehälter und dem weiteren mobilen Endgerät erfolgen kann. Beispielsweise können die gespeicherten Daten auch zu einem späteren Zeitpunkt abgerufen werden.

Gemäß einer Ausführungsform können im Schritt des Empfangens die Daten mittels der Drahtlosverbindung als eine Ultrabreitband-Verbindung (UWB) empfangen werden. Im Schritt des Herstellens kann die weitere Drahtlosverbindung mit dem weiteren mobilen Endgerät als eine Ultrabreitband-Verbindung hergestellt werden. Vorteilhafterweise können die Daten durch den vorgestellten Ansatz automatisiert abgerufen und der weiteren Person angezeigt werden.

Der Schritt des Herstellens der Drahtlosverbindung mit dem weiteren mobilen Endgerät und zusätzlich oder alternativ dazu der Schritt des Bereitstellens kann oder können ansprechend auf ein Auslösesignal von dem weiteren mobilen Endgerät ausgeführt werden. Vorteilhafterweise kann das Auslösesignal manuell durch die weitere Person oder alternativ automatisch durch eine Erfassung einer Annäherung des weiteren mobilen Endgerätes ausgelöst werden. Vorteilhafterweise kann der weiteren Person die Information über das weitere mobile Endgerät angezeigt werden. Weiterhin können sich auch zusätzliche mobile Endgeräte unabhängig voneinander mit dem Lagerbehälter koppeln und die auf dem Lagerbehälter gespeicherten Informationen abrufen.

Der hier vorgestellte Ansatz schafft ferner eine Steuereinrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinrichtung einlesbares Sensorsignal darstellen. Ein Ausgangssignal kann ein Steuersignal oder ein Datensignal darstellen, das an einer Ausgangsschnittstelle der Steuereinrichtung bereitgestellt werden kann. Die Steuereinrichtung kann ausgebildet sein, um die Ausgangssignale unter Verwendung einer in Hardware oder Software umgesetzten Verarbeitungsvorschrift zu bestimmen. Beispielsweise kann die Steuereinrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Es wird ferner ein Verfahren zum Betreiben eines mobilen Endgerätes vorgestellt, wobei das Verfahren einen Schritt des Herstellens einer Drahtlosverbindung mit einem Lagerbehälter umfasst, um eine Datenübertragung zwischen dem Lagerbehälter und dem mobilen Endgerät zu ermöglichen. Außerdem umfasst das Verfahren einen Schritt des Einlesens von durch den Lagerbehälter bereitgestellten Daten, die eine durch eine Person bereitgestellte Information über einen Inhalt des Lagerbehälters repräsentieren, und einen Schritt des Ansteuerns einer Anzeigeeinrichtung des mobilen Endgerätes ansprechend auf das Einlesen unter Verwendung der Daten, um einem Nutzer die Information anzuzeigen.

Das Verfahren kann vorteilhafterweise für ein mobiles Endgerät eingesetzt werden, das beispielsweise dem zuvor erwähnten weiteren mobilen Endgerät entsprechen kann. Das bedeutet, dass das Verfahren vorteilhafterweise zum Abrufen einer in einem Lagerbehälter gespeicherten Information durchgeführt und zusätzlich oder alternativ angesteuert werden kann. Vorteilhafterweise kann der Nutzer dabei erfahren, welche Inhaltsstoffe oder Zutaten in dem Lagerbehälter gelagert werden.

Gemäß einer Ausführungsform kann das Verfahren einen Schritt des Auswertens der Daten unter Verwendung mindestens eines Auswertekriteriums umfassen, um ein Auswerteergebnis zu erhalten. Im Schritt des Ansteuerns kann die Anzeigeeinrichtung unter Verwendung des Auswerteergebnisses angesteuert werden. Das Auswertekriterium kann beispielsweise eine durch den Nutzer eingestellte Eingabe sein, beispielsweise bei einer Lebensmittelallergie. Im Schritt des Auswertens können dabei die Daten vorteilhafterweise daraufhin ausgewertet werden, ob das als Auswertekriterium eingestellte Lebensmittel in dem Lagerbehälter enthalten ist oder nicht. Das Auswerteergebnis kann spezifizieren oder angeben, ob das als Auswertekriterium eingestellte Lebensmittel in dem Lagerbehälter enthalten ist oder nicht.

Beispielsweise kann der Schritt des Herstellens manuell durch den Nutzer ausgelöst oder automatisiert ansprechend auf ein Verbindungssignal angesteuert werden. Das Verbindungssignal kann ansprechend auf eine Annäherung zwischen dem mobilen Endgerät bzw. weiteren mobilen Endgerät und dem Lagerbehälter und/oder ansprechend auf eine Funkabtastung generiert sein oder werden. Je nach konkreter Situation kann somit die Information dem Nutzer zuverlässig bereitgestellt werden.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Weiterhin wird ein Lagerbehälter zum Lagern von Lebensmitteln vorgestellt, der eine Datenübertragungseinrichtung zum datenübertragungsfähigen Koppeln mit mindestens einem mobilen Endgerät über mindestens eine Drahtlosverbindung, eine Speichereinrichtung zum Speichern von Daten und eine Steuereinrichtung in einer zuvor genannten Variante aufweist. Die Steuereinrichtung ist mit der Speichereinrichtung und der Datenübertragungseinrichtung datenübertragungsfähig verbunden.

Der Lagerbehälter kann vorteilhafterweise als ein handelsüblicher Behälter zur Aufbewahrung von Lebensmitteln ausgeformt sein. Der Lagerbehälter kann eine Energiebereitstelleinheit aufweisen, die beispielsweise als ein wiederaufladbarer Akku ausgeführt sein kann. Vorteilhafterweise kann die Datenübertragungseinrichtung als eine Funkeinrichtung ausgeführt sein, die mittels UWB mit dem mindestens einen mobilen Endgerät, insbesondere mit einer Mehrzahl von mobilen Endgeräten koppelbar sein kann.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer, einer Steuereinheit und/oder einer Steuereinrichtung ausgeführt, so kann das Programmprodukt oder Programm zur Durchführung, Umsetzung und/oder Ansteuerung der Schritte eines der Verfahren nach einer der hier beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Lagerbehälters zum Lagern von Lebensmitteln;
- Figur 2: eine schematische Darstellung eines Ausführungsbeispiels eines Lagerbehälters zum Lagern von Lebensmitteln;
- Figur 3: ein Ablaufdiagramm eines Ausführungsbeispiels eines Verfahrens zum Betreiben eines Lagerbehälters zum Lagern von Lebensmitteln;
- Figur 4: ein Blockschaltbild eines Ausführungsbeispiels einer Steuereinrichtung eines Lagerbehälters zum Lagern von Lebensmitteln;
- Figur 5: ein Ablaufdiagramm eines Ausführungsbeispiels eines Verfahrens zum Betreiben eines mobilen Endgerätes; und
- Figur 6: ein Blockschaltbild eines Ausführungsbeispiels einer Steuereinheit.

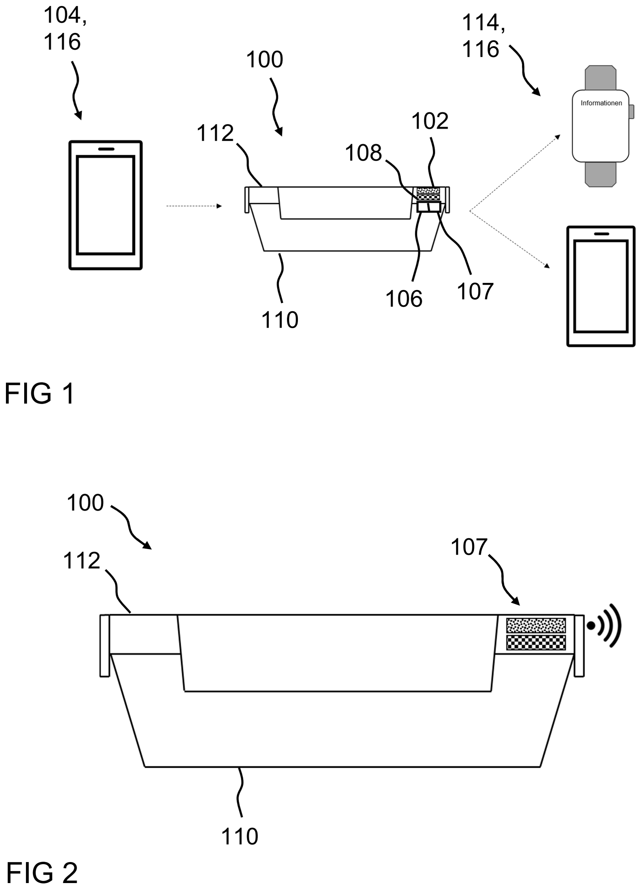

Figur 1 zeigt eine schematische Darstellung eines Ausführungsbeispiels eines Lagerbehälters 100 zum Lagern von Lebensmitteln. Der Lagerbehälter 100 ist ausgebildet, um Lebensmittel zu lagern. Beispielsweise ist der Lagerbehälter 100 für einen Haushalt verwendbar, aber auch im gastronomischen Bereich. Der Lagerbehälter 100 weist eine Datenübertragungseinrichtung 102 zum datenübertragungsfähigen Koppeln mit mindestens einem mobilen Endgerät 104, 114, 116, eine Speichereinrichtung 106 zum Speichern von Daten und eine Steuereinrichtung 107 auf, die mit der Speichereinrichtung 106 und der Datenübertragungseinrichtung 102 datenübertragungsfähig verbunden ist.

Gemäß einem Ausführungsbeispiel weist der Lagerbehälter 100 zusätzlich eine Energiebereitstelleinheit 108 auf. Ferner umfasst der Lagerbehälter 100 gemäß einem Ausführungsbeispiel eine Aufnahmeschale 110 und ein Deckelelement 112 zum Abdecken der Aufnahmeschale 110. Die Datenübertragungseinrichtung 102, die Speichereinrichtung 106, die Steuereinrichtung 107 und/oder die Energiebereitstelleinheit 108 sind gemäß einem Ausführungsbeispiel an dem Deckelelement 112 angeordnet. Alternativ sind die Datenübertragungseinrichtung 102, die Speichereinrichtung 106 und/oder die Energiebereitstelleinheit 108 als Teil der Steuereinrichtung 107 realisierbar.

Das mindestens eine mobile Endgerät 104 ist beispielsweise als ein Smartphone realisiert. Über die Datenübertragungseinrichtung 102 ist der Lagerbehälter 100 zusätzlich mit mindestens einem weiteren Endgerät 114 koppelbar, das beispielsweise als ein weiteres Smartphone, Tablet oder beispielsweise als eine Smartwatch realisiert ist. Das bedeutet, dass der Lagerbehälter 100 parallel und/oder sequentiell mit einer Mehrzahl 116 von mobilen Endgeräten koppelbar ist.

In anderen Worten ausgedrückt wird durch den beschriebenen Ansatz eine Datenübertragung auf einen vereinfacht als Behälter bezeichneten Lagerbehälter 100 ermöglicht, um Informationen über verschiedene Endgeräte 104, 114, 116 abzurufen. Dazu werden Daten, wie beispielsweise ein Rezept oder Zutaten, mittels des mobilen Endgerätes 104 zum Beispiel über UWB auf den Behälter 100 übertragen, der beispielsweise als eine Auflaufschüssel oder als ein Aufbewahrungsbehälter ausgeführt ist. Diese Daten sind mittels einer Mehrzahl 116 von weiteren Endgeräten 114 über UWB vom Behälter beispielsweise automatisiert abrufbar. Dadurch kann ein Nutzer beispielsweise Hinweise auf Zutaten, die Allergien auslösen können, erhalten oder ein Rezept zum Nachkochen abrufen.

Insgesamt bedeutet dies, dass die Daten von einer Person aktiv abrufbar sind und verarbeitet werden können. Dabei erfolgt kein Austausch mehr von Person zu Person. Die Person, welche die Informationen benötigt, muss nicht aktiv nachfragen, aussagefähige Personen finden etc., sondern kann die hinterlegten Daten eigenständig abrufen und verarbeiten.

Nachfolgend sind Anwendungsbeispiele beschrieben:
Eine Person hat beispielsweise eine Lebensmittelunverträglichkeit oder Allergie. Bei einem Buffet oder Ähnlichem stehen viele Speisen zur Verfügung, aber die Person weiß aufgrund der Unverträglichkeit nicht, was sie essen kann, und benötigt Informationen über die Zutaten.

Es findet eine Feier statt und alle Gäste bringen Speisen für ein Buffet mit. Eine Person bereitet einen Salat mit Nüssen vor und bringt diesen zur Party mit. Die Informationen zu den Zutaten werden auf den Lagerbehälter 100 via UWB übertragen. Auf der Feier befindet sich ein Gast, der allergisch auf Nüsse reagiert. Über sein mobiles Endgerät 114, beispielsweise eine Smart Watch, wird der Gast mit der Nussallergie darüber informiert, dass sich genau in diesem Behälter 100 mit dem Salat Nüsse befinden. Seine Smart Watch 114 kommuniziert mit dem Behälter 100 und die auf den Gast zugeschnittenen Informationen werden via UWB mitgeteilt.

Figur 2 zeigt eine schematische Darstellung eines Ausführungsbeispiels eines Lagerbehälters 100 zum Lagern von Lebensmitteln. Der Lagerbehälter 100 entspricht dem in Figur 1 beschriebenen Lagerbehälter und ist in Figur 2 lediglich vergrößert dargestellt.

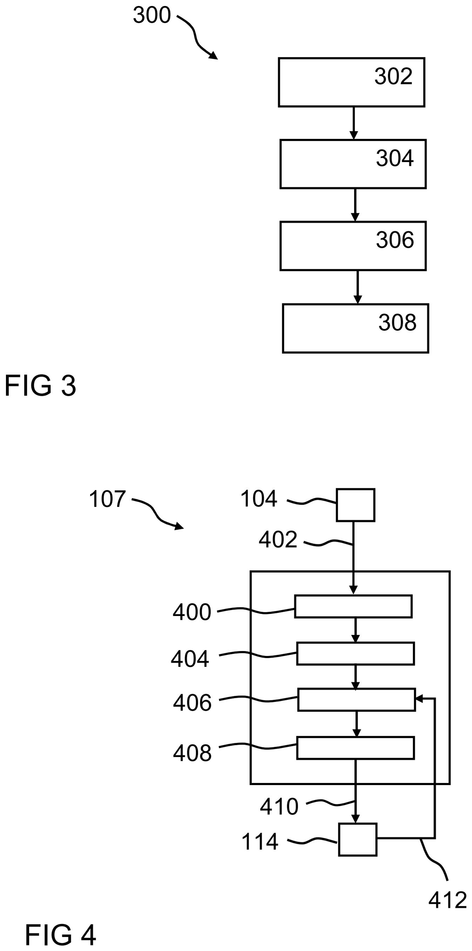

Figur 3 zeigt ein Ablaufdiagramm eines Ausführungsbeispiels eines Verfahrens 300 zum Betreiben eines Lagerbehälters zum Lagern von Lebensmitteln, wie er in mindestens einer der Figuren 1 bis 2 beschrieben wurde. Das Verfahren 300 umfasst dazu einen Schritt 302 des Empfangens, einen Schritt 304 des Speicherns, einen Schritt 306 des Herstellens und einen Schritt 308 des Bereitstellens.

Im Schritt 302 des Empfangens werden Daten über die Drahtlosverbindung zwischen dem mobilen Endgerät und dem Lagerbehälter empfangen, wobei die Daten eine durch eine Person bereitgestellte Information über einen Inhalt des Lagerbehälters repräsentieren. Im Schritt 304 des Speicherns werden die Daten auf einer Speichereinrichtung des Lagerbehälters gespeichert. Im Schritt 306 des Herstellens wird eine weitere Drahtlosverbindung zwischen dem Lagerbehälter und zumindest einem weiteren mobilen Endgerät zur Datenübertragung hergestellt. Die weitere Drahtlosverbindung erfolgt beispielsweise zwischen dem Lagerbehälter und dem weiteren mobilen Endgerät, sodass gespeicherte Daten zeitgleich oder zu einem späteren Zeitpunkt abrufbar sind. Im Schritt 308 des Bereitstellens werden die Daten über die weitere Drahtlosverbindung an das weitere mobile Endgerät bereitgestellt. Auf diese Weise wird die Information beispielsweise einer weiteren Person über das weitere mobile Endgerät angezeigt.

Gemäß einem Ausführungsbeispiel werden die Daten im Schritt 302 des Empfangens mittels der Drahtlosverbindung als eine Ultrabreitband-Verbindung (UWB) empfangen. Dabei wird optional im Schritt 306 des Herstellens die weitere Drahtlosverbindung mit dem weiteren mobilen Endgerät ebenfalls als eine Ultrabreitband-Verbindung hergestellt. Weiterhin optional wird der Schritt 306 des Herstellens der Drahtlosverbindung mit dem weiteren mobilen Endgerät und/oder Schritt 308 des Bereitstellens ansprechend auf ein Auslösesignal von dem weiteren mobilen Endgerät ausgeführt. Das Auslösesignal wird beispielsweise manuell ausgelöst oder automatisch durch eine Annäherung oder Erfassung des weiteren mobilen Endgerätes.

Figur 4 zeigt ein Blockschaltbild eines Ausführungsbeispiels einer Steuereinrichtung 107 eines Lagerbehälters zum Lagern von Lebensmitteln, wie er beispielsweise in mindestens einer der Figuren 1 bis 2 beschrieben wurde. Die Steuereinrichtung 107 ist ausgebildet, um ein Verfahren zum Betreiben eines Lagerbehälters anzusteuern und/oder auszuführen, wie es beispielsweise in Figur 3 beschrieben wurde. Die Steuereinrichtung 107 weist hierbei eine Empfangseinheit 400 zum Empfangen von Daten über eine Drahtlosverbindung 402 zwischen dem mobilen Endgerät 104 und dem Lagerbehälter auf, wobei die Daten eine durch eine Person bereitgestellte Information über einen Inhalt des Lagerbehälters repräsentieren. Weiterhin umfasst die Steuereinrichtung 107 eine Speichereinheit 404, die ausgebildet ist, um ein Speichern der Daten auf einer Speichereinrichtung des Lagerbehälters zu bewirken, eine Herstelleinheit 406, die ausgebildet ist, um ein Herstellen einer weiteren Drahtlosverbindung zwischen dem Lagerbehälter und zumindest einem weiteren mobilen Endgerät zur Datenübertragung zu bewirken, und eine Bereitstelleinheit 408 zum Bereitstellen der Daten über die weitere Drahtlosverbindung 410 an das weitere mobile Endgerät. Beispielsweise stellt die Herstelleinheit 406 die weitere Drahtlosverbindung 410 mit dem weiteren mobilen Endgerät ansprechend auf ein Auslösesignal 412 von dem weiteren mobilen Endgerät 114 her.

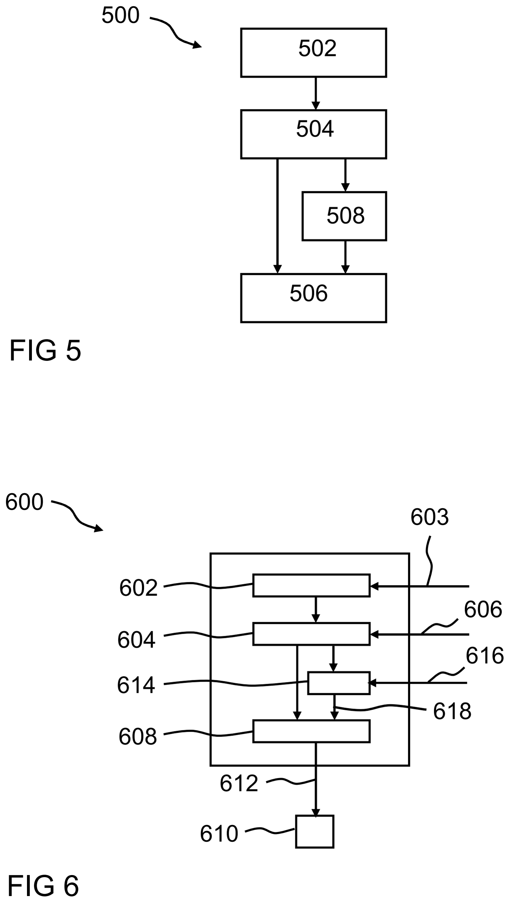

Figur 5 zeigt ein Ablaufdiagramm eines Ausführungsbeispiels eines Verfahrens 500 zum Betreiben eines mobilen Endgerätes, wie es beispielsweise mindestens in Figur 1 als weiteres mobiles Endgerät beschrieben wurde. Das Verfahren 500 umfasst dabei einen Schritt 502 des Herstellens einer Drahtlosverbindung mit einem Lagerbehälter, um eine Datenübertragung zwischen dem Lagerbehälter und dem mobilen Endgerät zu ermöglichen, einen Schritt 504 des Einlesens von durch den Lagerbehälter bereitgestellten Daten, die eine durch eine Person bereitgestellte Information über einen Inhalt des Lagerbehälters repräsentieren, und einen Schritt 506 des Ansteuerns einer Anzeigeeinrichtung des mobilen Endgerätes ansprechend auf das Einlesen unter Verwendung der Daten, um einem Nutzer die Information anzuzeigen. Der Schritt 502 des Herstellens wird dabei optional manuell durch den Nutzer ausgelöst oder automatisiert ansprechend auf ein Verbindungssignal angesteuert.

Gemäß einem Ausführungsbeispiel umfasst das Verfahren 500 zudem einen Schritt 508 des Auswertens der Daten unter Verwendung mindestens eines Auswertekriteriums, um ein Auswerteergebnis zu erhalten, wie beispielsweise eine Angabe über ein Allergen bzw. dessen Vorhandensein oder Abwesenheit. Im Schritt 506 des Ansteuerns wird folglich die Anzeigeeinrichtung unter Verwendung des Auswerteergebnisses angesteuert.

Figur 6 zeigt ein Blockschaltbild eines Ausführungsbeispiels einer Steuereinheit 600. Die Steuereinheit 600 ist dabei ausgebildet, um ein Verfahren zum Betreiben eines mobilen Endgerätes anzusteuern und/oder durchzuführen, wie es beispielsweise in Figur 5 beschrieben wurde. Die Steuereinheit 600 ist beispielsweise als Teil des mobilen Endgerätes ausgeführt, das in Figur 1 als weiteres mobiles Endgerät beschrieben ist. Die Steuereinheit 600 weist eine Herstelleinheit 602 auf, die ausgebildet ist, um eine Drahtlosverbindung mit einem Lagerbehälter herzustellen, um eine Datenübertragung zwischen dem Lagerbehälter und dem mobilen Endgerät zu ermöglichen. Lediglich optional stellt die Herstelleinheit 602 die Drahtlosverbindung automatisiert ansprechend auf ein Verbindungssignal 603 her. Weiterhin umfasst die Steuereinheit 600 eine Einleseeinheit 604 auf, die ausgebildet ist, um von durch den Lagerbehälter bereitgestellte Daten 606 einzulesen, die eine durch eine Person bereitgestellte Information über einen Inhalt des Lagerbehälters repräsentieren, und eine Ansteuereinheit 608 zum Ansteuern einer Anzeigeeinrichtung 610 des mobilen Endgerätes ansprechend auf das Einlesen unter Verwendung der Daten 606, um einem Nutzer die Information anzuzeigen. Die Anzeigeeinrichtung 610 wird beispielsweise mittels eines Ansteuersignals 612 angesteuert.

Lediglich optional weist die Steuereinheit 600 eine Auswerteeinheit 614 auf, die ausgebildet ist, um die Daten 606 unter Verwendung mindestens eines Auswertekriteriums 616 auszuwerten, um ein Auswerteergebnis 618 zu erhalten. Die Ansteuereinheit 608 ist dabei ausgebildet, um die Anzeigeeinrichtung 610 zusätzlich oder alternativ unter Verwendung des Auswerteergebnisses 618 anzusteuern.

## Patentansprüche

1. Verfahren (300) zum Betreiben eines Lagerbehälters (100) zum Lagern von Lebensmitteln, wobei der Lagerbehälter (100) über eine Drahtlosverbindung (402) datenübertragungsfähig mit mindestens einem mobilen Endgerät (104) koppelbar ist, wobei das Verfahren (300) die folgenden Schritte umfasst:
- Empfangen (302) von Daten (606) über die Drahtlosverbindung (402) zwischen dem mobilen Endgerät (104) und dem Lagerbehälter (100), wobei die Daten (606) eine durch eine Person bereitgestellte Information über einen Inhalt des Lagerbehälters (100) repräsentieren;
- Speichern (304) der Daten (606) auf einer Speichereinrichtung (107) des Lagerbehälters (100);
- Herstellen (306) einer weiteren Drahtlosverbindung (410) zwischen dem Lagerbehälter (100) und zumindest einem weiteren mobilen Endgerät (114) zur Datenübertragung; und
- Bereitstellen (308) der Daten (606) über die weitere Drahtlosverbindung (410) an das weitere mobile Endgerät (114).

2. Verfahren (300) gemäß Anspruch 1, wobei im Schritt (302) des Empfangens die Daten (606) mittels der Drahtlosverbindung (402) als eine Ultrabreitband-Verbindung empfangen werden, und wobei im Schritt (306) des Herstellens die weitere Drahtlosverbindung (410) mit dem weiteren mobilen Endgerät (114) als eine Ultrabreitband-Verbindung hergestellt wird.

3. Verfahren (300) gemäß einem der vorangegangenen Ansprüche, wobei der Schritt (306) des Herstellens der weiteren Drahtlosverbindung (410) mit dem weiteren mobilen Endgerät (114) und/oder der Schritt (308) des Bereitstellens ansprechend auf ein Auslösesignal (412) von dem weiteren mobilen Endgerät (114) ausgeführt wird.

4. Steuereinrichtung (107), die ausgebildet ist, um die Schritte (302, 304, 306, 308) des Verfahrens (300) gemäß einem der vorangegangenen Ansprüche in entsprechenden Einheiten (400, 404, 406, 408) auszuführen und/oder anzusteuern.

5. Verfahren (500) zum Betreiben eines mobilen Endgerätes (114), wobei das Verfahren (500) die folgenden Schritte umfasst:
- Herstellen (502) einer Drahtlosverbindung (410) mit einem Lagerbehälter (100), um eine Datenübertragung zwischen dem Lagerbehälter (100) und dem mobilen Endgerät (114) zu ermöglichen;
- Einlesen (504) von durch den Lagerbehälter (100) bereitgestellten Daten (606), die eine durch eine Person bereitgestellte Information über einen Inhalt des Lagerbehälters (100) repräsentieren; und
- Ansteuern (506) einer Anzeigeeinrichtung (610) des mobilen Endgerätes (114) ansprechend auf das Einlesen (504) unter Verwendung der Daten (606), um einem Nutzer die Information anzuzeigen.

6. Verfahren (500) gemäß Anspruch 5, mit einem Schritt (508) des Auswertens der Daten (606) unter Verwendung mindestens eines Auswertekriteriums (616), um ein Auswerteergebnis (618) zu erhalten, wobei im Schritt (506) des Ansteuerns die Anzeigeeinrichtung (610) unter Verwendung des Auswerteergebnisses (618) angesteuert wird.

7. Verfahren (500) gemäß einem der Ansprüche 5 bis 6, wobei der Schritt (502) des Herstellens manuell durch den Nutzer ausgelöst oder automatisiert ansprechend auf ein Verbindungssignal (603) angesteuert wird.

8. Steuereinheit (600), die ausgebildet ist, um die Schritte (502, 504, 506, 508) des Verfahrens (500) gemäß einem der Ansprüche 5 bis 7 in entsprechenden Einheiten (602, 604, 608, 614) auszuführen und/oder anzusteuern.

9. Lagerbehälter (100) zum Lagern von Lebensmitteln, der die folgenden Merkmale aufweist:
- eine Datenübertragungseinrichtung (102) zum datenübertragungsfähigen Koppeln mit mindestens einem mobilen Endgerät (104, 114) über mindestens eine Drahtlosverbindung (402, 410);
- eine Speichereinrichtung (106) zum Speichern von Daten (606);
- eine Steuereinrichtung (107) gemäß Anspruch 4, die mit der Speichereinrichtung (106) und der Datenübertragungseinrichtung (102) datenübertragungsfähig verbunden ist.

10. Computer-Programmprodukt mit Programmcode zur Durchführung eines der Verfahren (300; 500) nach einem der Ansprüche 1 bis 3 oder 5 bis 7, wenn das Computer-Programmprodukt auf einer Steuereinrichtung (107) gemäß Anspruch 4 oder einer Steuereinheit (600) gemäß Anspruch 8 ausgeführt wird.
